(19) Europäisches Patentamt
European Patent Office
Office européen des brevets

(11) **EP 3 693 344 B1**

(12) **EUROPÄISCHE PATENTSCHRIFT**

(45) Veröffentlichungstag und Bekanntmachung des Hinweises auf die Patenterteilung:
**09.07.2025  Patentblatt 2025/28**

(21) Anmeldenummer: **20155780.8**

(22) Anmeldetag: **06.02.2020**

(51) Internationale Patentklassifikation (IPC):
*C02F 3/00* (2023.01)          *C02F 3/12* (2023.01)
*G01N 33/18* (2006.01)          *G01N 33/497* (2006.01)

(52) Gemeinsame Patentklassifikation (CPC):
**C02F 3/006; C02F 3/12; C02F 3/121; C02F 3/20;**
C02F 2209/003; C02F 2209/22; C02F 2209/225;
C02F 2209/245; Y02W 10/10

(54) **VERFAHREN UND VORRICHTUNG ZUR REGELUNG DER ZUFÜHRUNG VON UMGEBUNGSLUFT IN EIN BELEBUNGSBECKEN EINER ABWASSERKLÄRANLAGE**

METHOD AND DEVICE FOR CONTROLLING THE SUPPLY OF AMBIENT AIR TO AN ACTIVATION TANK OF A WASTE WATER PURIFICATION PLANT

PROCÉDÉ ET DISPOSITIF DE RÉGULATION DE L'ALIMENTATION EN AIR AMBIANT DANS UN BASSIN D'ACTIVATION D'UNE INSTALLATION DE PURIFICATION DES EAUX USÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2019  DE 102019103100**
**17.07.2019  DE 102019119328**

(43) Veröffentlichungstag der Anmeldung:
**12.08.2020  Patentblatt 2020/33**

(73) Patentinhaber: **Hallas, Antje**
**91301 Forchheim (DE)**

(72) Erfinder:
• **HALLAS, Antje**
**91301 Forchheim (DE)**
• **HALLAS, Ernst**
**91301 Forchheim (DE)**

(74) Vertreter: **Pröll, Jürgen et al**
**Die Patenterie GbR**
**Patent- und Rechtsanwaltssozietät**
**Nürnberger Straße 19**
**95448 Bayreuth (DE)**

(56) Entgegenhaltungen:
EP-A1- 0 585 702          EP-A2- 0 732 588
KR-A- 20160 104 249          US-A1- 2004 112 829

**Beschreibung**

Es wird ein Verfahren und eine Vorrichtung beschrieben, die eine geregelte Zuführung von Umgebungsluft in ein Belebungsbecken einer Abwasserkläranlage zeigen, mit den Merkmalen der Patentansprüche 1 und 14.

Hintergrund

Bei der Abwasserreinigung in Abwasserkläranlagen werden u. a. Bakterien und Kleinstorganismen eingesetzt, die das Abwasser unter aeroben Bedingungen biologisch reinigen. Hierzu wird der im Abwasser vorhandene Sauerstoff von den Bakterien und Kleinstorganismen, die im Weiteren mit Biologie bezeichnet werden, verarbeitet. Diese Verarbeitung bezeichnet man auch als Veratmung.

Um den Prozess der Veratmung aufrecht zu erhalten, wird in das Abwasser im aeroben Prozessschritt Sauerstoff in Form von Umgebungsluft eingeleitet und diese so gut wie möglich verteilt.

In bisher bekannten Messsystemen wird nach dem geläufigen Stand der Technik vorwiegend die Abluft hinsichtlich Sauerstoffgehalt ($O_2$-Gehalt in Vol.-%) und Kohlendioxidgehalt ($CO_2$-Gehalt in Vol.-%) analysiert. Je nach Einsatzfall werden daraus Parameter zur Regelung der einzutragenden Luftmenge anhand des aktuellen Sauerstoffbedarfs ermittelt, der jedoch stark von der aktuellen Schmutzfracht-Last im zu klärenden Abwasser abhängig ist.

Stand der Technik

Es ist bereits vorgeschlagen worden, die Menge der in das Abwasser einzubringenden Umgebungsluft anhand des im Abwasser vorhandenen und, als solchen gemessenen, gelösten Sauerstoffanteils zu bestimmen. Allerdings wurde bisher nicht entsprechend die fortwährend mögliche Änderung der Zusammensetzung und der Menge des kontinuierlich zufließenden Abwassers in eine Abwasserkläranlage mitberücksichtigt.

So ist aus der DE 30 19 698 A1 ein Verfahren zur Aufrechterhaltung einer optimalen Sauerstoffkonzentration in einem Belebungsbecken einer Abwasserreinigungsanlage bekannt. Entsprechend dem sich ändernden biologischen Sauerstoffbedarf im Belebungsbecken der biologischen Abwasserreinigungsanlage wird im Austrittsbereich aus dem Belebungsbecken der spezifische Sauerstoffgehalt im Wasser, in Form der Konzentration von gelöstem Sauerstoff, festgestellt und bei ca. zwei Drittel des vorgesehenen $O_2$-Gehaltes, d. h. des Sollwertes, die volle Zugabeleistung der Belüftungseinrichtung eingeleitet. Die Zugabeleistung wird mit zunehmender Angleichung an den Sollwert kontinuierlich bis zur Einstellung einer den Sollwert erhaltenden Mindestleistung gedrosselt und bei einem Abfall vom Sollwert wird eine jeweilige Anpassung an die geänderte und die sich ändernde Situation vorgenommen.

Aus der DE 31 50 902 A1 ist ein weiteres Verfahren zur biologischen Reinigung von Abwasser mit einem zweistufigen Reinigungsvorgang unter Zufuhr eines sauerstoffhaltigen Gases bekannt. Es wird das Abwasser in einer ersten Stufe durch einen Tropfkörper oder Filter und in der zweiten Stufe durch ein Belebungsbecken geleitet. Zur Erzielung hoher Reinigungswerte ist vorgesehen, der ersten Stufe über eine Zuleitung ein Behandlungsgas zuzuführen, welches mehr Volumenprozent an Sauerstoff enthält als Luft. Das entstehende Abgas wird über einen Gasströmungsweg aus der ersten Stufe in die zweite Stufe übergeleitet, und dabei wird die Menge des zugeführten Behandlungsgases so bemessen, dass das nach Durchgang durch die beiden Stufen über eine Abgasleitung insgesamt abgezogene Abgas noch 15 bis 70 Volumenprozent, vorzugsweise noch 25 bis 50 Volumenprozent Sauerstoff enthält.

Aus der DE 199 44 389 A1 ist es bekannt, zur Belüftung von Abwasser in einem Belebungsbecken im Bereich einer unteren Begasungszone ein erstes sauerstoffhaltiges Belüftungsgas dem Abwasser zuzuführen. Um hiervon ausgehend ein Verfahren zur effektiven Belüftung von Abwasser in einem Belebungsbecken kleiner Querschnittsfläche und großer Tiefe anzugeben, eine flexible und preiswerte Belüftungsvorrichtung dafür bereitzustellen, sowie ein Belebungsbecken vorzuschlagen, das auch bei kleiner Querschnittsfläche und großer Tiefe einen ausreichend hohen Sauerstoffeintrag in das zu behandelnde Abwasser erlaubt, wird hinsichtlich des Verfahrens vorgeschlagen, dass dem Abwasser in einer oberen Begasungszone ein zweites sauerstoffhaltiges Belüftungsgas zugeführt wird. Die Belüftungseinrichtung zeichnet sich durch eine untere Begasungseinheit und mindestens eine obere Begasungseinheit aus. Im Belebungsbecken wird eine untere Begasungszone mit einer unteren Begasungseinheit und oberhalb davon eine obere Begasungszone mit einer oberen Begasungseinheit vorgesehen.

Aus der EP 0 885 639 A1 ist ein Verfahren zur Regelung der Zufuhr von sauerstoffhaltigem Gas in einen Biofilter mit aufsteigender Strömung offenbart. Es werden Zufuhrmittel für zu filterndes Wasser im unteren Teil des Biofilters vorgesehen. Es ist ein Filterbett (im Allgemeinen aus mindestens einer Lage eines körnigen Filtermaterials bestehend, dessen Dichte geringer oder höher als die Wasserdichte ist, das jedoch auch aus einer festen strukturierten Packung gebildet sein kann), das als Unterlage für eine Biomasse dient, die zum Zersetzen der kohlenstoff- und/oder stickstoffhaltigen Verunreinigungen des zu filternden Wassers aktiv ist, eingesetzt. Weiterhin sind Verteilungsmittel eines sauerstoffhaltigen Gases (klassischerweise Luft) in mindestens einem Teil des Filterbettes vorgesehen. Außerdem ist ein oberhalb des Filterbettes vorgesehener Reservebereich vorhanden, welcher die Bildung einer Wasserschicht oberhalb des Filterbettes ermöglicht. Schließlich sind Mittel zum Ableiten des gefilterten Wassers, das aufwärts durch das Filter gelaufen ist, welche im oberen Teil des Filters angebracht sind, vorhanden.

Aus der WO 2001/19738 A1 ist ein Verfahren zur Belüftung von Abwasser in einem Belebungsbecken bekannt, indem unterhalb des Abwasserspiegels im Bereich einer unteren Begasungszone ein erstes sauerstoffhaltiges Belüftungsgas dem Abwassser zugeführt wird, und dem Abwasser in einer oberhalb der unteren Begasungszone verlaufenden oberen Begasungszone ein zweites sauerstoffhaltiges Belüftungsgas zugeführt wird.

Aus der EP 0 732 588 A2 ist ein Verfahren zur Bestimmung des Kohlenstoffabbaus und der Nitrifikation in biologischen Systemen, insbesondere in biologischen Abwasserreinigungsanlage Systemen offenbart. Es wird der zum Abbau der Schadstoffe benötigte Sauerstoff beispielsweise mit Belüften in das Belebungsbecken eingebracht wird. Es wird die Sauerstoffverbrauchsrate über die Größe des Sauerstoffüberschusses in Form von gelösten Sauerstoff mit Partikeldrucksensoren bestimmt und in Abhängigkeit dieser Sauerstoffverbrauchsrate werden durch definierte Sauerstoffzufuhr die biologischen Prozesse der Abwasserreinigung gesteuert.

Aus der EP 0 585 702 A1 eine Anordnung zur Regelung der Bio-Aktivität von biologischen Systemen, insbesondere in biologischen Abwasserreinigungssystemen, bei denen zur Aufrechterhaltung der Bio-Aktivität Sauerstoff zugeführt wird, offenbart. Es wird die Sauerstoffverbrauchsrate über die Größe des Sauerstoffüberschusses in Form von gelösten Sauerstoff mit Partialdrucksensoren bestimmt und in Abhängigkeit dieser Sauerstoffverbrauchsrate wird durch definierte Sauerstoffzufuhr die biologischen Prozesse der Abwasserreinigung gesteuert.

Aus der US 2004/0112829 A1 und der KR 2016 0104249 A ist ein weiteres Verfahren und eine Vorrichtungen zur fortgesetzten automatisierten Steuerung von biologischen Abwasserbehandlungsprozessen beschrieben.

Aufgabe Gegenüber den bekannten Ausführungen aus dem Stand der Technik besteht die Aufgabe darin, anhand der an der Oberfläche des Belebungsbeckens austretenden Gase die Zufuhr von Umgebungsluft in das Belebungsbecken zu regeln und zugleich die für den Schmutzfracht-Abbauprozess notwendige Zufuhr von Umgebungsluft auf ein Minimum zu reduzieren, wodurch eine erhebliche Energieeinsparung beim Betrieb der Abwasserkläranlage erzielbar ist.

Zudem soll eine alternative Lösung zu den aus dem Stand der Technik bekannten Verfahren und Vorrichtungen gegeben werden.

Lösung

Die vorstehend genannte Aufgabe wird durch Verfahrensmerkmale des Patentanspruches 1 und die Vorrichtungsmerkmale des Patentanspruches 14 gelöst.

Das erfindungsgemäße Verfahren dient zur Regelung der Zuführung von Umgebungsluft in ein Belebungsbecken einer Abwasserkläranlage. Das Verfahren zeichnet sich durch die Verfahrensschritte aus, dass

- lit a) mittels einer am Belebungsbecken angeordneten Auffangvorrichtung das an einer vordefinierbaren Stelle der Oberfläche des Belebungsbeckens aus dem Belebungsbecken austretende Gas, abgeschlossen von der Umgebungsluft, aufgefangen wird, und diese austretende Gasmenge einer Analyse unterzogen wird,
- lit b) im Rahmen der Analyse der Sauerstoffgehalt und der Kohlendioxidgehalt im an der Oberfläche des Belebungsbeckens aufgefangenen ausgetretenen Gases ermittelt wird,
- lit c) die Differenz aus der Summe des Sauerstoffgehalts und des Kohlendioxidgehalts zwischen der zugeführten Umgebungsluft und der Summe des Sauerstoffgehalts und des Kohlendioxidgehalts des an der Oberfläche des Belebungsbeckens aufgefangenen Gases ermittelt wird,
- lit d) aus der Differenz aus der Summe des Sauerstoffgehalts und des Kohlendioxidgehalts nach lit c), erzeugt durch den biologischen Schmutzfracht-Abbau und der nicht am biologischen Schmutzfracht-Abbau aktiv konzentrationsändernd beteiligten Gaskomponenten, die Menge des gesamten Sauerstoffverbrauchs aus der zugeführten Umgebungsluft und des anteilig im Belebungsbecken erzeugten Kohlendioxids bestimmt wird,
- lit e) die Menge der zugeführten Umgebungsluft in voreinstellbaren Schritten reduziert wird, solange die Proportion zwischen der in lit c) genannten Differenz und dem anteiligen Kohlendioxidgehalt unverändert bleibt und
- lit f) falls sich die Proportion zwischen der in lit c) genannten Differenz und dem anteiligen Kohlendioxidgehalt verändert, die Menge der zugeführten Umgebungsluft um mindestens die im vorherigen Schritt reduzierte Luftmenge wiederum erhöht wird.

In einer vorteilhaften Ausgestaltung der Erfindung nach Patentanspruch 2 ist vorgesehen, dass im Verfahrensschritt lit a) die austretende Gasmenge erfasst und ein typischer Teilstrom dessen einer Analyse unterzogen wird.

In einer vorteilhaften Ausgestaltung der Erfindung nach Patentanspruch 3 ist vorgesehen, dass im Verfahrensschritt lit d) die Proportion der unterschiedlichen, an der Sauerstoff-Zehrung beteiligten biologischen Abbauprozesse bestimmt wird, so dass entsprechend der aktuellen Proportion im Vergleich zur erfahrungsgemäß zu erwartenden Proportion die Verfahrensschritte lit e) und lit f) durch definierte Substrat-Zufuhr und/oder Sauerstoff-Sollwert-Variation im erfassten gelösten Sauerstoff und/oder durch geeignete Variation der Umgebungsluftzufuhr der Schmutzfrachtabbau geregelt wird.

In einer vorteilhaften Ausgestaltung der Erfindung nach Patentanspruch 4 ist vorgesehen, dass als eine Variation der Umgebungsluftzufuhr die Menge und/oder die Blasengröße der zugeführten Umgebungsluft verwendet werden/wird.

In einer vorteilhaften Ausgestaltung der Erfindung nach Patentanspruch 5 ist vorgesehen, dass der Schmutzfrachtabbau zielgerecht und nach den gewünschten Prozess-Anteilsproportionen geregelt wird.

In einer vorteilhaften Ausgestaltung der Erfindung nach Patentanspruch 6 ist vorgesehen, dass bei Verfahrensschritt lit b) weitere Gaskomponenten analysiert werden, welche als Störkomponenten im gewünschten Schmutzfracht-Abbau durch untypische Schmutzfrachteinleitung den Abbau-Prozess stören können und mittels Einleitung chemischer oder weiterer bakterieller Komponenten oder einem deutlichen Übermaß an Umgebungsluft durch den damit verbundenen Stripp-Effekt diese Störkomponenten kompensiert oder chemisch deaktiviert oder ausgestrippt werden.

In einer vorteilhaften Ausgestaltung der Erfindung nach Patentanspruch 7 ist vorgesehen, dass als weitere Gaskomponenten in der Abluft leichtflüchtige Kohlenwasserstoffe, welche als sogenannte Aromate typisch in Lösungsmitteln enthalten sind, erkannt werden.

In einer vorteilhaften Ausgestaltung der Erfindung nach Patentanspruch 8 ist vorgesehen, dass die eingetragene Umgebungsluft mittels eines auf dem Gelände der Abwasserkläranlage angeordneten Verdichters aus der Umgebungsluft angesaugt und mittels des Verdichters komprimiert und über einen Regelschieber oder ein Ventil dem Belebungsbecken zugeführt wird.

In einer vorteilhaften Ausgestaltung der Erfindung nach Patentanspruch 9 ist vorgesehen, dass die angesaugte Umgebungsluft anhand der messtechnisch erfassten austretenden analysierten Gasmenge über den Regelschieber oder das Ventil dem Belebungsbecken bedarfsgemäß zugeführt wird.

In einer vorteilhaften Ausgestaltung der Erfindung nach Patentanspruch 10 ist vorgesehen, dass sowohl die zugeführte Gesamtmenge der in das Belebungsbecken eingetragenen Umgebungsluft als auch die Menge der Sauerstoffzehrung im Belegungsbecken approximiert erfasst werden.

In einer vorteilhaften Ausgestaltung der Erfindung nach Patentanspruch 11 ist vorgesehen, dass die Differenzierung der Prozessanteile von Kohlenstoffabbau und weiterer sauerstoffzehrender biologischen Schmutzfrachtabbau-Anteile ohne gasförmig an der Oberfläche des Belebungsbeckens aus dem im Belebungsbecken austretende Oxidkomponenten, abgeschlossen von der Umgebungsluft, wie zum Beispiel Nitrate als Ergebnis der Nitrifikation, im Belebungsbecken anhand der Formel

$$\Delta = A - (a + b)$$

vorgenommen wird, wobei A für den $O_2$-Gehalt der zugeführten Umgebungsluft in Vol.-% mit messtechnisch vernachlässigbarem Anteil an CO2, nämlich etwa nur 0,035 Vol.-% Anteil, a für den $O_2$-Gehalt der Abluft in Vol.-% und b für den $CO_2$-Gehalt der Abluft in Vol.-% steht und der Kohlenstoff-Abbau im Belebungsbecken mindestens etwa Vierfünftel der Menge an für ihn zugeführten Sauerstoff für die $CO_2$-Produktion zehrt, und zusätzlich für die eigene Reproduktion, den Biomasse-Aufbau (bzw. deren Vermehrung) Sauerstoff (ohne adäquate Abgasproduktion) benötigt, sodass sich der der $\Delta$-Bezug anhand der Formel

$$\Delta = [(0{,}25 * b) + (\Delta_{NH4\text{-}Abbau})],$$

wobei: $\Delta_{C\text{-}Abbau} = 0{,}25*b$ und folglich: $\Delta_{NH4\text{-}Abbau} = \Delta - 0{,}25*b$,

ergibt, sofern die Kohlenstoffabbau-Biologie in voller Höhe von etwa 25% ihrer Sauerstoffzehrung für CO2-Produktion zusätzlich Sauerstoff für ihre Vermehrung zehrt und nicht weitere biologische Komponenten mit Sauerstoffzehrung und ohne gasförmige Oxidaustritte beteiligt sind, wie etwa für die $PO_4^{3-}$-Bildung, und

die Proportionen zwischen diesen beiden vorgenannten wesentlichen Prozessanteilen in der (in diesem Fall sogenannten) aeroben Nitrifikationsstufe sich vereinfacht nach der Formel

$$CF = C\text{-}Abbau \; / \; NH_4\text{-}Abbau = 1{,}25*b \; / \; (\Delta - 0{,}25*b)$$

darstellen lässt.

In einer vorteilhaften Ausgestaltung der Erfindung nach Patentanspruch 12 ist vorgesehen, dass für A als der Zahlenwert einundzwanzig messtechnisch (anstelle von 20,98 Vol.-%) angenommen wird.

In einer vorteilhaften Ausgestaltung der Erfindung nach Patentanspruch 13 ist vorgesehen, dass die Abwasserkläranlage in der Regel aufweist

- einen Schmutzwasserzulauf dessen Zulaufmenge variiert,
- eine dem Schmutzwasserzulauf nachgeordnete Absonderungsvorrichtung für die im Schmutzwasser enthaltenen mechanisch zurückhaltbaren groben Verschmutzungen,
- ein der Absonderungsvorrichtung nachgeschaltetes Absetzbecken in dem sich Stoffe, die im Schmutzwasser ungelöst enthalten sind und eine deutlich höhere Dichte als Wasser aufweisen, auf dessen Boden absetzen und sich Stoffe, die im Schmutzwasser ungelöst enthalten sind und eine deutlich geringere Dichte als Wasser aufweisen, an der Oberfläche des Schmutzwassers im Absetzbecken anlagern,
- das Belebungsbecken, dem Schmutzwasser aus dem Absetzbecken zugeführt wird und in welchem Belebtschlamm mit aggregierten Bakterien und anderen Mikroorganismen enthalten ist, welche Abwasserinhaltsstoffe biotisch oxidativ abbauen, wobei aus dem Belebungsbecken mit Belebtschlamm versetztes Wasser abläuft im selben Maß, wie Schmutzwasser aus dem Absetzbecken zugeführt wird, wobei im Bereich des Bodens zumindest eines Teils des Belebungsbeckens Umgebungsluft, die aus der Umgebung des Belebungsbeckens entnommen wird, in selbiges unter Druck zumindest zeitanteilig oder kontinuierlich feinblasig eingeblasen wird,
- ein Nachklärbecken, in das das mit Belebtschlamm versetzte Wasser abläuft und in dem der Belebtschlamm durch Absetzen aus dem gereinigten Abwasser abgetrennt wird, und
- einen Ablauf, über den das gereinigte Abwasser aus dem Nachklärbecken die Kläranlage verlässt.

Die erfindungsgemäße Vorrichtung dient zur Verwendung und zum Einsatz in dem Verfahren zur Regelung der Zuführung von Umgebungsluft in ein Belebungsbecken einer Abwasserkläranlage. Die Vorrichtung besteht zumindest aus einer Steuereinheit, einer Auffangvorrichtung für die aus dem Belebungsbecken austretenden Gase, die an einer vordefinierbaren Stelle der Oberfläche des Belebungsbeckens angeordnet ist und Teile aus dem im Belebungsbecken austretendem Gas, abgeschlossen von der Umgebungsluft, auffängt, und die aufgefangene Gasmenge zumindest teilweise einer Gasanalyseeinheit zuführt, wobei der Gasanalyseeinheit außerdem Umgebungsluft von einer Aufnahmeposition zugeführt wird und die Gasanalyseeinheit die Differenz aus der Summe des Sauerstoffgehalts und des Kohlendioxidgehalts zwischen der zugeführten Umgebungsluft an der Aufnahmeposition und des von der Auffangvorrichtung an der Oberfläche des Belebungsbecken aufgefangenen Gases ermittelt und der Steuereinheit zuleitet, wobei die Steuereinheit den Verdichter ansteuert, der Umgebungsluft im Umfeld der Aufnahmeposition ansaugt, diese komprimiert und über den Regelschieber oder das Ventil dem Belebungsbecken zuführt, wobei die Steuereinheit mittels des Verdichters die Menge der zugeführten Umgebungsluft in voreinstellbaren Schritten reduziert, solange die Proportion CF zwischen der Proportion aus dem Kohlendioxidgehalt und dem von der Kohlenstoffabbau-Biologie zur Vermehrung gezehrten Sauerstoff des abgeschirmt von der Umgebung aufgefangenen aus dem Belebungsbecken austretenden Gases, hier angenommen mit maximal 1,25*b, und der Differenz $\Delta$ aus der Summe des Sauerstoffgehalts und des Kohlendioxidgehalts zwischen der zugeführten Umgebungsluft und Summe der Komponenten Sauerstoff und Kohlendioxid der an der Oberfläche des Belebungsbeckens mittels der Auffangvorrichtung aufgefangenen Gases abzüglich des zum ermittelten gesamten Sauerstoffverbrauch der den Kohlendioxidgehalt verursachenden Biologie-Anteile festgestellten Sauerstoffzehrungsanteils, siehe obige Proportion, hier angenommen mit maximal 1,25*b, unverändert bleibt, jedoch die Steuereinheit mittels des Verdichters die Menge der zugeführten Umgebungsluft, in voreinstellbaren Schritten erhöht, falls sich die Proportion CF zwischen der Differenz aus der Summe des Sauerstoffgehalts und des Kohlendioxidgehalts zwischen der zugeführten Umgebungsluft und der an der Oberfläche des Belebungsbeckens mittels der Auffangvorrichtung aufgefangenen Gases zu Ungunsten des Nitrifikationsanteils verändert.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

Kurzbeschreibung der Zeichnung

In der Zeichnung FIG ist schematisch der Aufbau einer Abwasserkläranlage dargestellt, mit den erfindungswesentlichen Komponenten.

Es wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

Die nachfolgend beschriebene Abwasserkläranlage kann in anderer als der nachfolgend beschriebenen Form konfiguriert und aufgebaut sein. Die nachfolgende Beschreibung einer Abwasserkläranlage dient dem weiteren Verständnis der Erläuterung der Erfindung, da diese in einer Abwasserkläranlage, vorzugsweise in einem Belebungsbecken, zur Anwendung kommt.

Die nachfolgend beschriebene Abwasserkläranlage besitzt eine Abwasserzuführung 1. Über die Abwasserzuführung 1 wird das in der Kanalisation gesammelte und im Zuge der Abwasserbeseitigung zur Abwasserkläranlage transportierte Abwasser, auch als Schmutzwasser bezeichnet, der Abwasserkläranlage zugeführt. Der Abwasserzuführung 1 ist zumeist ein Zulaufbecken 2 nachgeordnet, in dem das über die Abwasserzuführung 1 zugeführte Abwasser zunächst gesammelt wird. Die Abwasserzuführung 1 und das Zulaufbecken 2 werden gemeinsam auch als Abwasserzulauf oder Schmutzwasserzulauf bezeichnet. Häufig ist dortig eine Vorrichtung zur Messung der Zulaufmenge sowie ein Pumpwerk zur Hebung des Abwassers vorhanden.

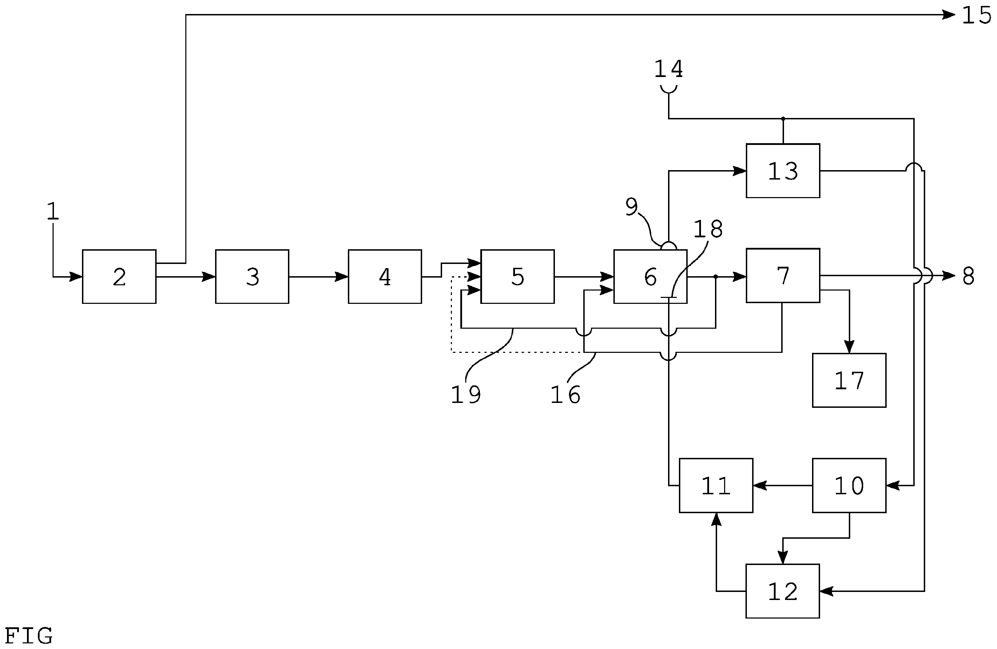

An dem Zulaufbecken 2 ist ein sogenannter Regenüberlauf 15 angeordnet. Dieser Regenüberlauf 15 dient dazu, dass die Kläranlage nicht mit Abwasser überflutet wird, sollte eine zu große Menge an Abwasser-Regenwasser-Gemisch zugeleitet werden. Insbesondere bei einem sogenannten Mischsystem, in dem sowohl Regen- als auch Schmutzwasser in einem Kanal gefasst und der Kläranlage gemeinsam zugeleitet werden, muss das Kanalnetz in der Regel durch ein Regenentlastungssystem, durch einen Regenüberlauf und/oder durch ein Regenüberlaufbecken entlastet werden, damit die Kläranlage nicht überlastet wird. Dies kann entweder bereits im Kanalnetz oder auch erst in der Kläranlage geschehen. In der Ausgestaltung nach FIG 1 erfolgt dies mittels des Regenüberlaufs 15.

Eine andere Möglichkeit der Zuführung von Schmutzwasser und Regenwasser an eine Kläranlage ist eine Zuführung nach dem Trennsystem. Hierbei werden das Schmutzwasser und das Regenwasser jeweils in einem separaten Abwasserkanal der Kläranlage zugeführt. Wird nun zu viel Regenwasser der Kläranlage zugeführt, wird dieses direkt über einen Regenüberlauf 15 von der Kläranlage abgeleitet.

Dem Zulaufbecken 2 ist eine Absonderungsvorrichtung 3 nachgeschaltet. Das Abwasser aus dem Zulaufbecken 2 wird in einer nahezu kontinuierlichen Menge, jedoch kann diese auch variieren, je nach Menge an Zulauf von Abwasser, über die Absonderungsvorrichtung 3 einem Absetzbecken 4 zugeleitet. In der Absonderungsvorrichtung 3 wird das Abwasser durch einen Rechen oder durch ein Sieb geleitet. Im Rechen oder Sieb bleiben grobe Verschmutzungen, wie Artikel der Monatshygiene, Holzstücke, Steine, Laub und auch tote Tiere ausgefiltert. Diese Grobstoffe würden sowohl die Pumpen der Kläranlage verstopfen als auch das biologische Reinigungsergebnis verschlechtern. Je schmaler der Durchgang für das Abwasser im Rechen oder Sieb ist, desto weniger Grobstoffe verbleiben im Abwasser. Die so dem Abwasser entnommenen Grobstoffe werden einer geeigneten weiteren Entsorgung zugeführt.

Das Absetzbecken 4 ist häufig mit der Absonderungsvorrichtung 3 kombiniert. Es bestehen auch Abwasserkläranlagen, bei welchen das Absetzbecken 4 mit dem Vorklärbecken 5 kombiniert ist.

Das Absetzbecken 4 entfernt grobe, aus dem Abwasser auf dem Boden des Absetzbeckens 4 absetzbare Verunreinigungen aus dem Abwasser, wie z. B. Sand, kleine Steine oder Glassplitter. Diese Stoffe würden zu betrieblichen Störungen in der Anlage führen und einen höheren Verschleiß oder Verstopfungen der Leitungen innerhalb der Kläranlage bewirken. In einer besonderen Ausgestaltung ist das Absatzbecken 4 als Langsandfang ausgestaltet oder als belüfteter Langsandfang, in dem zugleich Fette und Öle an der Oberfläche abgeschieden werden. Eine weitere besondere Ausgestaltung ist ein Rundsandfang oder ein Tiefsandfang.

Die Belüftung des Sandfangs, die vorzugsweise am Boden des Absetzbeckens 4 angeordnet ist, erzeugt eine Wirbelströmung. Durch die eingeblasene und gelöste Luft verringert sich die Dichte des Abwassers. Aufgrund beider Effekte setzen sich die schweren, vorwiegend mineralischen Feststoffe am Boden des Absetzbeckens ab. Beim Tiefsandfang strömt das Abwasser von oben in das Absetzbecken 4 und erreicht durch dessen Tiefe eine relativ hohe Verweildauer, wodurch sich der schwerere Sand am Boden des Absetzbeckens absetzt.

Aus dem Absetzbecken 4 wird das Abwasser in das Vorklärbecken 5 geleitet. Das Abwasser fließt langsam durch das Vorklärbecken 5. Ungelöste Stoffe (Fäkalien, Papier etc.) setzen sich daher auf dem Boden des Vorklärbeckens 5 ab oder schwimmen an der Oberfläche des Vorklärbeckens 5 auf. Circa fünfunddreißig Prozent der organischen Stoffe werden im Vorklärbecken 5 entfernt. Es entsteht dort ein sogenannter Primärschlamm, der in den sogenannten Voreindicker geleitet wird. Zusammen mit dem überschüssigen Schlamm aus der aeroben Belebungsanlage wird er eingedickt. Der Schlamm setzt sich ab und das überschüssige Wasser, sogenanntes Trübwasser, wird abgezogen und dem weiteren Reinigungsprozess der Kläranlage zurückgeführt. Der eingedickte Schlamm wird zur weiteren anaeroben Behandlung z. B. in einen Faulturm gepumpt. In einer alternativen Ausgestaltung werden die nitrathaltigen organischen Stoffe des Abwassers von der entsprechend anaerob aktiven Biologie im Belebtschlamm (ohne Sauerstoff-Zufuhr von außen) als Reduktionsmittel zur Stickstoffentfernung mittels Denitrifikation zu Stickstoff ($N2$) im anaeroben, mitunter sogar anoxischen Teil beziehungsweise in der anaeroben/anoxischen Phase der biologischen Stufe verwendet.

Im Becken 5 erfolgt gegebenenfalls zugleich eine sogenannte vorgeschaltete Denitrifikation. In diesem Fall zählt auch dieser anaerobe Beckenbereich bereits zur sogenannten biologischen Schmutzfrachtabbau-Prozessstufe.

Aus dem Vorklärbecken/Denitrifikationsbecken 5 gelangt das Abwasser in das Belebungsbecken 6.

Im Belebungsbecken 6 wird das mit Belebtschlamm versetzte Abwasser belüftet (aerobe Prozessstufe). Durch Belüften des mit Belebtschlamm versetzten Abwassers werden die Abwasserinhaltsstoffe im Abwasser in dieser biologischen Prozessstufe biotisch oxidativ abgebaut. Dabei werden von aeroben Bakterien und anderen Mikroorganismen Kohlenstoffverbindungen größtenteils zu Kohlendioxid abgebaut sowie teilweise zu Biomasse umgesetzt und der zumeist als Ammoniak ($NH_3$) bzw. Ammonium ($NH_4^+$-Ionen) eingebettete Stickstoff aus den organischen Verbindungen wird durch andere Bakterien zunächst mit Sauerstoff zu Nitrit ($NO_2^-$) und schließlich zu Nitrat ($NO_3^-$) oxidiert. Das Belebungsbecken 6 wird zumeist im kontinuierlichen Durchlauf und mit kontinuierlicher Luftzufuhr betrieben, d. h., in das Belebungsbecken 6 läuft kontinuierlich Abwasser zu, wird in diesem Beckenbereich aerob betrieben (Lufteintrag) und im selben Maß wie beim Zufluss läuft Belebtschlamm enthaltendes (Ab-)Wasser kontinuierlich ab. Durch die Zugabe von Fällmitteln kann mittels chemischer Reaktionen außerdem der Nährstoff Phosphor entfernt werden, gegebenenfalls durch Simultanfällung. Dies verbessert auch die Absetzeigenschaften des Belebtschlamms im Nachklärbecken.

Das aus dem Belebungsbecken 6 ablaufende und mit Belebtschlamm versetzte Abwasser läuft in das Nachklärbecken 7.

Bei dem Konzept der vorgeschalteten Denitrifikation wird ein mitunter beträchtlicher Teil des Abwasser-Belebtschlamm-Gemisches als sogenannte Rezirkulation (durchaus in der Größenordnung von ganzzahligem Vielfachen des Zulaufes, typisch bis zu etwa 400%) der biologischen Prozessstufe vom Ablauf der Nitrifikation vor dem Zufluss in das Nachklärbecken abgezweigt und erneut der biologischen Schmutzfrachtabbau-Prozessstufe zugeführt, und zwar zum Einlauf parallel zum Abwasser-Zulauf vor der bzw. in die anaerobe(n) Denitrifikationsstufe. Hiermit wird in der Regel erreicht, dass die im Vergleich zur Kohlenstoffabbau-Biologie schwächer aktive Nitrifikations-Biologie (mit dem Ziel des Ammonium-Abbaus) im erforderlichen Maß die mit der Schmutzfracht zugeführten Ammonium-Komponenten nach deren (aerob bewirkten) Abbau mit der Folge von Nitrat-Bildung (in der Regel dann im Abwasser-Belebtschlamm-Gemisch nach der Nitrifikation mit weit höherer Nitrat-Konzentration als im der Kläranlage zugeführten Abwasser) durch die bewusste erneute anaerobe Denitrifikation (meist wegen der Effizienz als vorgeschaltete Denitrifikation betrieben) wiederum durch den dort erfolgenden Nitrat-Abbau (deshalb Denitrifikation) entsprechend den abwassertechnischen Vorschriften die erforderlichen Abbaumengen auch des ansonsten in der Regel mit nur sehr geringer Konzentration im zugeführten Ab- bzw. Schmutzwasser enthaltenen, eben erst durch die Nitrifikation gebildeten Nitrats gerecht wird.

Das Nachklärbecken 7 bildet mit dem Belebungsbecken 6 eine Prozesseinheit. Im Nachklärbecken 7 wird der Belebtschlamm durch Absetzen aus dem Abwasser abgetrennt. Ein Teil des Belebtschlammes wird in das Belebungsbecken 6 als sogenannter Rücklaufschlamm zurückgeführt; dieser erfolgt beispielsweise über die Überschussschlammentnahme 16; dieser Belebtschlamm wird deshalb auch als Rücklaufschlamm bezeichnet. Die Rückführung des Belebtschlamms erfolgt, um die Konzentration an Mikroorganismen im Belebungsbecken 6 ausreichend hoch zu halten. Würde keine (teilweise) Rückführung des im Nachklärbecken abgesetzten Belebtschlamms (der Schmutzfracht-Abbaubiologie) erfolgen, so wäre die Abbauleistung der Bakterien und Mikroorganismen zu niedrig. Der Überschuss bzw. anteilige Zuwachs an Biomasse, der sogenannte Überschussschlamm, wird aus dem Nachklärbecken 7 in die Schlammentsorgung 17 geleitet. Dies erfolgt über eine Überschusschlammentnahmeleitung.

Es ist weiterhin Leitung 19 vorgesehen, über die mit Belebtschlamm versetztes Abwasser, entnommen zwischen dem Belebungsbecken 6 und dem Nachklärbecken 7 in das Becken 5 (jedenfalls unmittelbar zum Zufluss in die vorgeschaltete Denitrifikation) erfolgt. Diese Leitung wird auch als Rezirkulationsleitung bezeichnet.

Über den Ablauf 8 wird das gereinigte Abwasser aus der Kläranlage ausgeleitet.

Es ist nun Ziel der Erfindung, durch ein Messsystem die Menge an in das Belebungsbecken 6 einzubringendem Sauerstoff zu bestimmen und stets die optimale Menge an Sauerstoff zuzuführen.

Zur Zuführung von Sauerstoff in das Belebungsbecken 6 ist im Belebungsbecken 6 eine Einblasvorrichtung 18 angeordnet. In einer vorteilhaften Ausgestaltung ist die Einblasvorrichtung 18 in der Nähe des Bodens des Belebungsbeckens 6 angeordnet. Es wird an einer Aufnahmeposition 14 Umgebungsluft angesaugt und in die Einblasvorrichtung 18 in das Belebungsbecken 6 eingetragen, eingeblasen. Vorteilhaft ist außerdem vorgesehen, dass die Einblasvorrichtung 18 nahezu den gesamten Boden des Belebungsbeckens 6 einnimmt und variabel einstellbar große oder kleine Blasen mit angesaugter Umgebungsluft in das Belebungsbecken 6 eintragen kann.

Es ist eine Steuereinheit 12 vorgesehen, die über einen Verdichter 10, der die Umgebungsluft an der Aufnahmeposition 14 ansaugt, verdichtet und mit Druck, d. h. komprimiert und in einer hierfür vorgesehenen, ihm dafür folgenden Rohrleitung über ein Ventil 11 oder einen Regelschieber oder ein anderes geeignetes Luftmengen-Regelorgan in der zuführenden Rohrleitung der Einblasvorrichtung 18 die Luft zuführt. Die Steuereinheit kann dabei sowohl die Aktivität des Verdichters als auch die individuelle Regelung des betreffenden Luftmengen-Regelorgans führen. Außerdem ist eine Gasanalyseeinheit 13 vorhanden. Die Gasanalyseeinheit 13 erfasst zyklisch den Sauerstoffgehalt der an der Aufnahmeposition 14 angesaugten Umgebungsluft.

Im Weiteren ist eine Auffangvorrichtung 9 vorgesehen, die am oder über dem Belebungsbecken 6 angeordnet ist. Diese Auffangvorrichtung 9 nimmt das an der Oberfläche des Abwassers im Belebungsbecken 6 austretende Gas, abgeschirmt von der Umgebungsluft, auf und analysiert u. a. dessen Sauerstoffgehalt und dessen $CO_2$-Gehalt. Anhand der von der Gasanalyseeinheit 13 ermittelten Werte steuert die Steuereinheit 12 über den Verdichter 10 und das Ventil 11 die Menge an in das Belebungsbecken 6 einzubringender Luftmenge.

Die Auffangvorrichtung 9 ist so ausgebildet, dass das aufgefangene Gas an der Oberfläche des Abwassers im Belebungsbecken abgeschirmt von der Umwelt aufgefangen und an die Gasanalyseeinheit 13 geführt wird.

Es wird durch eine angepasste Zufuhr von Druckluft in der Weise der Belebtschlamm im Belebungsbecken 6 mit Sauerstoff versorgt, dass die Biologie, d. h. die Bakterien und Mikroorganismen im Belebtschlamm, den Sauerstoff aus der eingetragenen Luft in gelöster Form aufnehmen und in hinreichender Menge veratmen, also verbrauchen kann.

Es wird zur Bemessung beispielsweise der sogenannte Alpha-Wert ermittelt. Der Alpha-Wert beschreibt die Abweichung des Aufnahmeverhaltens des konkreten Abwassers zu reinem Wasser hinsichtlich der physikalisch reduzierten Aufnahmefähigkeit von Sauerstoff in gelöster Form.

Reines Wasser besitzt den Alpha-Wert 1. Damit gilt für den Alpha-Wert (abgesehen von durch Säure-Komponenten verursachbaren auch höheren Alpha-Werten als 1) die Formel:

$$0 \leq Alpha \leq 1.$$

Alpha = 0,5 bedeutet, dass doppelt so viel Sauerstoff in Gasform angeboten werden muss, um dieselbe Menge an Sauerstoff wie in reinem Wasser in dem aktuellen Abwasser in Lösung zu bringen. Dieser Wert wird multiplikativ gekoppelt an den sogenannten Fouling Factor F. Der Fouling Factor F ist dabei eine definierte Beschreibungsgröße für die Reduktion des Sauerstoffeintrags bedingt durch Zu- und Zersetzungserscheinungen der Belüfter-Technik, also den Verschleiß der konkret im Einsatz befindlichen Belüftungselemente, etwa der betreffenden Kunststofffolien oder feinporösen Keramikkörper, die in der Einblasvorrichtung 18 angeordnet sind.

Außerdem werden die Sauerstoff-Transfereffizienz, im Englischen mit Oxygen Transfer Efficiency, kurz OTE, bezeichnet, bezogen auf den Übergang von Sauerstoff aus der Gasphase in die Flüssigphase, somit sogenannter Gelöst-Sauerstoff, englisch Dissolved Oxygen, kurz DO, und die Sauerstoff-Zehrungsrate $OV_R$, die Oxygen Uptake Rate, kurz OUR, welche die aktuell von der Biologie verbrauchte (gezehrte) Sauerstoffmenge beschreibt, berechnet.

Jeder dieser Parameter hat jedoch einen integralen Charakter. Das heißt, diese Parameter beschreiben eine jeweils übergreifende Eigenschaft zum Ab- bzw. Schmutzwasser-Zustand bzw. zum gesamten biologischen Abbauprozess bezüglich des Sauerstoffeintrags in den Belebtschlamm, was bekanntlich als Abwasser-Biologie-Gemisch bezeichnet wird.

Das betrifft auch den Begriff des sogenannten Schlammalters, bei dem ohne weitere Differenzierung die für den Ablaufkontroll-Parameter maßgebliche biologische Spezies beschrieben wird. Und dies geschieht so, obwohl dabei an sich recht unterschiedliche und separat, aber nicht unabhängig, zu betrachtende biologische Prozessabläufe gegeben sind. Beispielsweise sind recht unterschiedliche Zeitabläufe und Intensitäten der biologischen Prozessanteile aufgrund der sehr unterschiedlichen Reproduktionszeiten, proportional zum jeweiligen durchschnittlichen Bakterienalter der betreffenden biologischen Komponente, und damit Arbeitsaktivitäten der jeweiligen Schmutzfrachtabbau-Bakterien gegeben, die die sogenannte Nitrifikation betreffen, wobei die Nitrifikation nur dann erfolgreich laufen kann, wenn parallel dazu die weit mächtigere Kohlenstoffabbau-Biologie, oft genannt heterotrophe Bakterien, hinreichend aktiv "sein darf" also geeignet mit "Futter", kohlenstoffhaltiger Schmutzfracht, versorgt ist.

Eine Differenzierung dieser für den Gesamtprozess typischen Parameter zur aktuellen Situation im jeweiligen biologisch, bakteriell basiert, separat ablaufenden Prozess ist bisher nicht möglich.

Die sogenannte Kohlenstoffabbau-Biologie, die betreffenden Bakterien und Mikroorganismen hierfür, ist aktiv bzw. arbeitet zum anteiligen Kohlenstoff-Schmutzfracht-Abbau. Bei dieser "Arbeit" entsteht anteilig als Ergebnis der Veratmung aus dem abgebauten Kohlenstoff Kohlendioxid, $CO_2$. Dieses wird durch die Gasblasenbewegung der eingetragenen Druckluft im Wesentlichen aus dem Belebtschlamm ausgestrippt und ist ein prozesstypischer Bestandteil der Abluft, während in der zugeführten Druckluft, der angesaugten Umgebungsluft, ein $CO_2$-Anteil von lediglich etwa 0,04 Vol.-% gegeben ist. Daneben erfolgt weiterhin seitens der Kohlenstoffabbau-Biologie neben der Nutzung des insgesamt gezehrten Sauerstoffs mit Umsetzung zu $CO_2$ auch noch eine weitere Sauerstoffnutzung in Höhe von bis zu rund 25% des oben genannten $O_2$-Verbrauchs, jedoch ohne $CO_2$-Produktion, sondern für den eigenen Biomasse-Aufbau (Vermehrung). Schließlich ist dieser Teil der Biologie auch noch in der Lage, einen Teil des benötigten Sauerstoffs zum Kohlenstoffabbau als "Betriebsstoff" für seine Kohlenstoffreduktion aus Teilen des in der Schmutzfracht chemisch gebundenen Sauerstoffs herauszulösen und so "zu veratmen". Dies geschieht jedoch vorrangig unter anaeroben Bedingungen, also ohne gezielte Zufuhr vom deutlich einfacher aufnehmbaren gelösten Sauerstoff (Belüftung, aerob geführte Prozessphase) beim Durchlaufen der meist vorgeschalteten anaeroben Denitrifikationsphase.

Im Falle der Nitrifikation wandelt die Biologie unter Aufnahme von gelöstem Sauerstoff ($O_2$ als DO) mit der Schmutzfracht zulaufendes Ammonium ($NH_4^+$-Ionen) in zunächst Nitrit ($NO_2^-$-Ionen) um (speziell durch die Nitrisomonas-Bakterien) und in einem weiteren Prozessschritt das entstandene Nitrit in Nitrat ($NO_3^-$-Ionen) um (durch speziell die Nitrobakter-Bakterien). Neben einem deutlich geringeren Bedarf an Sauerstoff für den eigenen Biomasse-Aufbau (Vermehrung) als bei der Kohlenstoffabbau-Biologie wird in diesem Prozess der benötigte Sauerstoff im Normalfall ohne maßgebliche anderweitige Gasproduktion (Gasfreisetzung) verbraucht, also in Nitrit und Nitrat gebunden umgesetzt. Für den Aufbau an Biomasse der Nitrifikationsbiologie, also nur für die Vermehrung, entfallen hier anteilig nur bis zu etwa maximal 6 % (verglichen zum für den reinen Ammonium-Abbau verwendeten $O_2$) und damit messtechnisch vernachlässigbar wenig des durch diese Biologiespezies insgesamt veratmeten DO. Der Gesamtgehalt an Sauerstoff der ursprünglich zugeführten Druckluft (mit einem Frischluft-$O_2$-Anteil von 20,94 Vol.-%) reduziert sich damit im aeroben Bereich sowohl durch den Kohlenstoffabbau ("Hochlast-Biologie") als auch durch den Ammoniumabbau ("Nitrifikationsbiologie", "Schwachlastbiologie").

Der Sauerstoffanteil der aus dem aeroben Belebungsbecken austretenden Abluft (englisch meist Off-Gas genannt) ist also insgesamt charakteristisch für die Aktivität der Biologie, abgesehen von Phosphor-Bestandteilen, die hier außer Acht gelassen sind.

In der Regel entstehen im normalen aeroben Kohlenstoffabbau- und Ammoniumabbau-Prozess keine weiteren Gaskomponenten außer $O_2$-Gehalt-Reduktion und $CO_2$-Gehalt-Steigerung. Anhand der bekannten Zusammensetzung der zugeführten Druckluft (Frischluft) kann über deren Mengenerfassung und die Konzentration in der Abluft durchaus auch über die bisherigen Aussagen zu den Abluftkomponenten $O_2$ und $CO_2$ weit hinausgehend zu den jeweiligen biologischen Abbauprozess-Anteilen eine neuartige, quantitative Aussage getroffen werden, sofern die jeweiligen Anteile an Luftfeuchte (RH; in zugeführter Druckluft und in austretender Abluft) sich nicht wesentlich unterscheiden (durchschnittlich $\pm 5\%$). Das ist unter den meist üblichen normalen Prozessbedingungen durchaus gegeben und RH damit für diese neuartige Prozessregelung irrelevant.

Die Lösung ist die Bestimmung der Differenz, hier genannt Delta ($\Delta$), dieser messtechnisch "aktiven" GasgemischKomponenten in ihrer Summe zwischen zugeführter Luft (Frischluft) und Abluft (Analyse-Ergebnis):

$$\Delta = 21{,}0 - \{a\,[O_2\text{-Gehalt Abluft in Vol.-\%}] + b\,[CO_2\text{-Gehalt Abluft in Vol.-\%}]\} \tag{1}$$

**Annahme:**

Die C-Abbau-Biologie benötigt etwa ¼ der Menge an $O_2$, die sie für die $CO_2$-Produktion zehrt, zusätzlich für die eigene

Reproduktion (Biomasse-Aufbau, Vermehrung); der $\Delta$-Bezug ist folglich:

$$(2) \qquad \Delta = [(0{,}25 * b) + (\Delta_{NH4\text{-}Abbau})]\,, $$

wobei: $\Delta_{C\text{-Abbau}} = 0{,}25 * b$ und folglich: $\Delta_{NH4\text{-Abbau}} = \Delta - 0{,}25 * b$

Damit ist in einfacher Weise der Anteil der biologischen Prozesse für Kohlenstoffabbau und Nitrifikation bestimmt. Der $O_2$-Verbrauch der Nitrifikationsbiologie für deren eigene Reproduktion von nur etwa 6 % des Gesamtverbrauchs der Nitrifikation an $O_2$ kann hierbei messtechnisch vernachlässigt werden.

Die Aussagen über den Verlauf der betreffenden biologischen Abbauprozess-Anteile und zu deren Proportionen untereinander sind sowohl für die generelle Prozessführung als auch im Ausnahmefall von Prozessstörungen extrem hilfreich.

Die Proportionen zwischen diesen beiden wesentlichen Prozessanteilen in der aeroben Nitrifikationsstufe (etwa genannt "C-Faktor" oder kurz "CF") lassen sich einfach darstellen wie folgt:

$$CF = C\text{-Abbau} : NH_4\text{-Abbau} = 1{,}25 * b : (\Delta - 0{,}25 * b) \tag{3}$$

Die Bewertung der Proportionen und deren Schwankungen erfolgt entsprechend individueller Erfahrung auf der jeweiligen Kläranlage vor Ort. In der Regel sind spätestens nach einem Jahr alle tageszeitlichen, wochentypischen sowie saisonalen (Jahreszeit-typischen) Effekte und Verläufe hinreichend erfasst.

Sowohl die statistische Erfassung als auch ein entsprechend automatisierter Vergleich der aktuell festzustellenden Proportion der Prozessanteile CF mit den bisherigen Erfahrungen, gegebenenfalls widergespiegelt in einer betreffenden Datei, sind damit automatisiert möglich. Ebenso können anhand der Vergleichsergebnisse unnormale Schwankungen sofort erkannt und prozesstechnisch regulierend verwertet werden. Die Berechnung und die Bewertung des CF können in einer geeigneten Prozessoreinheit in der Gasanalyseeinheit 13 oder auch in einem zu dieser ergänzend eingebauten, separaten Prozessoreinheit oder auch in der/einer zentralen Steuereinheit 12 erfolgen.

Damit steht ein neuer, bisher im allgemeinen praktisch unbekannter, nunmehr technisch ermittelt einfacher Parameter für die Prozessführung in Echtzeit ("online") zur Verfügung, der insbesondere bei Versuchen zur Energieeffizienzsteigerung und sonstigen Prozessoptimierung äußerst wertvoll den direkten Zugang zu Prozessverhältnissen erlaubt, die bisher nur in theoretischen Betrachtungen jenseits des unmittelbaren tagespraktischen Betriebs auf der Kläranlage überhaupt diskutiert wurden.

Somit sind Prozessoptimierungen zur weiteren Energieeinsparung im energieintensivsten Prozess auf üblichen kommunalen Kläranlagen, der belüfteten (aeroben) biologischen Prozessstufe, in nunmehr Echtzeit ("online") kontrolliert hinsichtlich der Auswirkungen auf die Prozessanteile und damit maßgeblich für die gesetzlich einzuhaltenden Ablaufwerte (etwa an Gesamt-Stickstoffeinleitung durch Ammonium und Nitrat) möglich.

Im nachfolgenden wird dies beispielhaft betrachtet ausgeführt:

Generell zugeleitet:

$$20,94 \text{ Vol.-\% } O_2 + 0,04 \text{ Vol.-\% } CO_2 = 20,98 \text{ Vol.-\% } (\approx 21,0 \text{ Vol.-\%})$$

Bsp. 1 für Abluft:

$$16,0 \text{ Vol.-\% } O_2 + 3,0 \text{ Vol.-\% } CO_2 + [\Delta = 2,0 \text{ Vol.-\%}] = 21,0 \text{ Vol.-\%}$$

Bsp. 2 für Abluft:

$$17,0 \text{ Vol.-\% } O_2 + 2,0 \text{ Vol.-\% } CO_2 + [\Delta = 2,0 \text{ Vol.-\%}] = 21,0 \text{ Vol.-\%}$$

Bsp. 3 für Abluft:

$$16,0 \text{ Vol.-\% } O_2 + 2,0 \text{ Vol.-\% } CO_2 + [\Delta = 3,0 \text{ Vol.-\%}] = 21,0 \text{ Vol.-\%}$$

Gesamt-Anteil C-Abbau an $OV_R$: 1,25*b

    im konkreten Beispiel 1: 3,75
    im konkreten Beispiel 2: 2,50
    im konkreten Beispiel 3: 2,50

Gesamt-Anteil $NH_4$-Abbau an $OV_R$: $\Delta$ - 0,25*b

    im konkreten Beispiel 1: 1,25
    im konkreten Beispiel 2: 1,50
    im konkreten Beispiel 3: 2,50

Die Proportionen zwischen diesen beiden wesentlichen Prozessanteilen in der aeroben Nitrifikationsstufe (siehe oben "C-Faktor" oder kurz "CF") ergeben sich bei den angeführten typischen Abluft-Beispielen wie folgt:

    Beispiel 1):
    3 : 1 CF = 3,0    Zulässige Schwankungsbreite normal ($\pm$0.6)

    Beispiel 2):
    1,7 : 1 CF = 1,7    Zulässige Schwankungsbreite normal ($\pm$0,3)

    Beispiel 3):
    1 : 1 CF = 1,0    Zulässige Schwankungsbreite normal ($\pm$0,2)

Die Bewertung der Proportionen und deren Schwankungen erfolgt entsprechend individueller Erfahrung auf der jeweiligen Kläranlage vor Ort. In der Regel sind spätestens nach einem Jahr alle tageszeitlichen, wochentypischen sowie saisonalen (Jahreszeit-typischen) Effekte und typischen Verläufe hinreichend erfasst.

Es ergeben sich nun die folgenden Ansätze zur Regelung:

- Druckluftzufuhr (Verdichter 10, Ventil 11, Regelschieber) entsprechend der errechneten Zielluftmenge $Q_{target}$ aus OUR

$$Q_{target} = f \ (OUR, \ \text{on-site data})$$

- Störung des temporären Gleichgewichts zwischen Kohlenstoffabbau und Nitrifikation

- Last erfordert mehr Nitrifikation, C-Abbau normal

    $\rightarrow$ Sauerstoffzufuhr ist zu erhöhen

→ Rezirkulationsrate ist zu erhöhen

→ alternativ außerordentliche Erhöhung der DO-Sollwerte

- Last erfordert Nitrifikation, aber zu wenig CSB vorhanden

→ evtl. künstliche C-Zufuhr

- Hemmung in Denitrifikation; verstärkt C-Abbau erst in der aeroben Prozessphase

→ $DO_{target}$-Anhebung zur Nitrifikationsunterstützung infolge Vorrang C-Abbau, weil
→ Lastverschiebungskorrektur je nach Gesamtlast (siehe Last erfordert mehr Nitrifikation, C-Abbau normal)

- Logische Lastabnahme in typischen Schwachlastzeiten:

-- Proportionale Absenkung $DO_{target}$ zur Effizienzsteigerung, solange hierfür typisches temporäres Gleichgewicht zwischen C-Abbau und Nitrifikation erfahrungsgemäß vorhersehbar in Toleranzgrenzen (z.B. CF wie gewohnt etwa 20 % vom Wert) gewahrt bleibt;
-- etwa Absenkung von 1,0 mg/l - wie bisher z.B. bei kontinuierlicher Belüftung in allen Nitrifikationsphasen empfohlen und erprobt, weil z.B. keine Regelung nach Ammonium-Werten existiert - auf bewusst nur noch 0,7 mg/l - wie bisher trotz evtl. $O_2$-Mangel-Risiko auf einer süddeutschen Kläranlage bereits umgesetzt, aber dafür mit vorbeugender Beobachtung der Ammonium-Konzentration am Denitrifikations-Zulauf bzw. nach der Vorklärung, um rechtzeitig bei unvorhergesehenem Ende der Schwachlastphase bzw. einem Schmutzfracht-Stoß den $DO_{target}$ wieder wie dann benötigt vorbeugend anzuheben auf z.B. 1 mg/l oder höher, je nach üblicher Prozessführung in solchem Fall.

Es ist ein Verfahren zur Differenzierung der Prozessanteile Kohlenstoffabbau und Nitrifikation beschrieben, das anhand der Formel

$$\Delta = 21,0 - \{a \, [O_2\text{-Gehalt Abluft in Vol.-\%]} + b \, [CO_2\text{-Gehalt Abluft in Vol.-\%]}\}$$

die Differenz aus den Summen der prozessaktiven Gaskomponenten im zugeführten Status, in der Regel Umluftluft bzw. Fischluft, und im Ergebnis einer prozesstypischen Abluftanalyse, in der Regel die Summe aus $O_2$-Gehalt und $CO_2$-Gehalt, je in Vol.-%, gebildet wird und diese Differenz hinsichtlich ihrer qualitativen Prozessbeiträge aus "Sauerstoffverbrauch für den Aufbau der Kohlenstoffabbau-Biologie" und "Sauerstoffverbrauch für den Nitrifikationsprozess" weiter aufgespalten wird.

Weiterhin können in vorteilhafter Weise die Proportionen zwischen diesen beiden wesentlichen, hiermit differenzierten Prozessanteilen für die Beobachtung, Beurteilung und Regelung bzw. notwendige Korrektur bei erkannten untypischen Abweichungen von typischen Situationen manuell oder auch automatisiert, z.B. programmtechnisch im Prozessleitsystem integriert, verwertet werden.

Außerdem ist eine Vorrichtung zur Bestimmung der wesentlichen Prozessanteile "Kohlenstoffabbau" und "Ammoniumabbau" im üblichen aeroben Nitrifikationsverfahren auf klassischen Kläranlagen beschrieben, welche

1. aus von der Umwelt isoliert aufgefangener und anschließend in Echtzeit analysierter prozesstypischer Abluft der Anteil an $O_2$ und $CO_2$ (z.B. in Vol.-%) bestimmt;

2. zur Vereinfachung der Bestimmung der maßgeblich mit in die Auswertung eingehenden zugeführten Luftmenge bzw. des anteiligen Sauerstoffs (bei Frischluft $O_2$ = 20,94 Vol.-%) [anlagenseitig durch seinen Zusatzaufwand bei Verrohrung und Installation von Luftmengen-Messgeräten ein oft den Einsatz von Abluft-Messtechnik verhinderndes Argument] ein passendes Gasmengen-Messgerät unmittelbar an einem definierten Überschuss-Abluft-Ausgang der Abluft-Auffanghaube installiert und elektrisch in die Auswertung des Abluft-Messgerätes mit eingebunden wird, so dass aus der volumenanteiligen Verschiebung der [Summe der prozessneutralen Gase, z.B. = Stickstoff und Edelgase = 79 Vol.-% in der zugeführten Druckluft] und der {100 Vol.-% minus [Summe der prozessbeteiligten Gase in der Abluft = ($O_2$-Gehalt in Vol.-% plus $CO_2$-Gehalt in Vol.-%)]} durch die damit gegebene Ergänzung des prozessneutralen Gasgemisch-Anteils in Vol.-%, deren konstante Masse und damit die aktuell zugeführte Gasgemisch-Gesamtmasse (z.B. komprimierte Frischluft) und folglich auch die zugeführte Masse der prozessaktiven Gasgemischkomponenten (bei komprimierter Frischluft $O_2$ = 20,94 Vol.-% und $CO_2$ = 0,04 Vol.-%) hieraus bestimmt werden können, wobei der konstante Abluft-Volumenstrom, der als Bypass zur Abluftanalyse zur messtechnischen Basiseinheit geführt wird (bekannte Pumpen-Charakteristik), als Abluft-Teilstrom-Konstante mit einzurechnen ist;

3. elektronisch oder in anderer geeigneter Weise die Differenz, hier genannt "Delta", kurz "$\Delta$", ermittelt aus:

a) der "Summe von $O_2$ und $CO_2$ im zum
Nitrifikationsprozessschritt auf der Anlage zugeführten Gas" (in der Regel komprimierte Frischluft, in der Regel Komponenten angegeben in Vol.-%, damit im Fall von komprimierter Frischluft: Summe [($O_2$-Gehalt in Vol.-% = 20,94 Vol.-%) plus $CO_2$-Gehalt in Vol.-% = 0,04 Vol.-%)] = 20,98 Vol.-%, messtechnisch also rund 21,0 Vol.-% und

b) der "Summe von $O_2$ und $CO_2$ in der dem
Nitrifikationsprozess entweichenden prozesstypischen Abluft - z.B. entsprechend der Gleichung $\Delta$ = 21,0 - {a [$O_2$-Gehalt Abluft in Vol.-%] + b [$CO_2$-Gehalt Abluft in Vol.-%]} , also Summe [($O_2$-Restgehalt in der Abluft in Vol.-%) plus ($CO_2$-Gehalt in der Abluft in Vol.- %)];

4. aus diesem $\Delta$-Wert entsprechend der Gleichung

$$\Delta = [(0,25 * b) + (\Delta_{NH4-Abbau})] \, ,$$

wobei: $\Delta_{C-Abbau}$ = 0,25*b und folglich: $\Delta_{NH4-Abbau}$ = $\Delta$ - 0,25*b
die beiden wesentlichen Schmutzfrachtabbau-Prozessanteile "Kohlenstoffabbau" und "Ammoniumabbau" je einzeln elektronisch in einer geeigneten Prozessoreinheit oder in anderer geeigneter Weise bestimmt werden, wobei der Anteil der Kohlenstoffabbau-Biologie-Zehrung für den eigenen Biomasseaufbau und folglich ohne Kohlendioxidproduktion von 25% des gemessenen Wertes b einer erfahrungsgemäßen Annahme unterliegt, der im jeweiligen konkreten Fall auch davon abweichend, insbesondere nach unten, variieren kann;

5. aus der Proportion zwischen den ermittelten Prozessanteilen "Kohlenstoffabbau" und "Ammoniumabbau" ein periodisch typischer Wert, z.B. genannt "C-Faktor" oder auch kurz "CF" elektronisch in der Steuereinheit 12 oder in anderer geeigneter Weise bestimmt wird, nach der Gleichung

$$CF \quad = \quad C\text{-}Abbau : NH_4\text{-}Abbau = 1,25*b : (\Delta - 0,25*b);$$

6. in einem individuell manuell durchgeführten Vergleich des in Echtzeit festgestellten CF oder in einem automatisierten elektronischen Vergleich des ermittelten Echtzeit-CF mit aus den erfahrungsgemäß festgestellten, temporär situationstypischen und/oder auch bereits als Datensatz gespeicherten Proportionen, wobei die Bewertung der Proportionen und deren Schwankungen entsprechend individueller Erfahrung auf der jeweiligen Kläranlage vor Ort erfolgt; in der Regel sind spätestens nach einem Jahr alle tageszeitlichen, wochentypischen sowie saisonalen (Jahreszeit-typischen) Effekte und typischen Verläufe hinreichend erfasst; bei gravierenden Abweichungen von CF, z.B. bei Abweichungen von mehr als 20% zum erfahrungsgemäß prozesstypischen CF, ist individuell manuell prozesskorrigierend zu reagieren, individuell manuell oder auch in einer geeignet programmierten Prozessoreinheit, wie der Steuereinheit 12, bzw. im Prozessleitsystem vorprogrammiert prozesssteuernd oder auch prozessregelnd eingegriffen wird.

Es wird mittels einer am Belebungsbecken 6 angeordneten Auffangvorrichtung 9 das an einer vordefinierbaren, repräsentativen Stelle der Oberfläche des Belebungsbeckens 9 aus dem im Belebungsbecken 6 austretende Gas, abgeschlossen von der Umgebungsluft, aufgefangen, und die austretende Gasmenge wird einer Analyse in der Gasanalyseeinheit 13 unterzogen. Die Gasanalyseeinheit 13 ermittelt im Rahmen der Analyse den Sauerstoffgehalt und den Kohlendioxidgehalt in Vol.-% des an der Oberfläche des Belebungsbeckens 6 aufgefangenen austretenden Gases. Die Steuereinheit 12 oder eine andere geeignete Prozessoreinheit, der die Daten der Gasanalyseeinheit 13 übermittelt werden, ermittelt die Differenz aus der Summe des Sauerstoffgehalts und des Kohlendioxidgehalts zwischen der zugeführten Umgebungsluft, ebenfalls ermittelt von der Gasanalyseeinheit 13, und des an der Oberfläche des Belebungsbecken 6 aufgefangenen Gases. Aus der Differenz der Summe des Sauerstoffgehalts und des Kohlendioxidgehalts, erzeugt durch den biologischen Schmutzfracht-Abbau und die nicht am biologischen Schmutzfracht-Abbau aktiv konzentrationsändernd beteiligten Gaskomponenten, ermittelt die Steuereinheit 12 oder eine andere geeignete Prozessoreinheit die Menge des gesamten Sauerstoffverbrauchs und des anteilig erzeugten Kohlendioxids im Belebungsbecken 6. Die Steuereinheit 12 reduziert entsprechend diesem Ergebnis die Menge der zugeführten Umgebungsluft in voreinstellbaren Schritten, solange die Proportion zwischen der vorgenannten Differenz und dem anteiligen Kohlendioxidgehalt unverändert bleibt und, falls sich die Proportion zwischen der vorgenannten Differenz und dem anteiligen Kohlendioxidgehalt verändert, erhöht sie die Menge der zugeführten Umgebungsluft um mindestens die im vorherigen Schritt reduzierte Luftmenge.

Die Steuereinheit 12 oder eine andere geeignete Prozessoreinheit bestimmt anhand der von der Gasanalyseeinheit 13 übermittelten Daten die Proportion der unterschiedlichen, an der Sauerstoff-Zehrung beteiligten biologischen Abbauprozesse, so dass entsprechend der aktuellen Proportion im Vergleich zur erfahrungsgemäß zu erwartenden Proportion durch definierte Substrat-Zufuhr und/oder Sauerstoff-Sollwert-Variation im erfassten gelösten Sauerstoff und/oder durch geeignete Variation der Luftzufuhr der Schmutzfrachtabbau variiert werden kann.

Anhand der Verteilung von Einblasvorrichtungen 18 in Belebungsbecken 6 sowie anhand des bekannten Beckenvolumens jeder dieser separat hinsichtlich der zugeführten Druckluftmenge geregelten Beckenzonen inklusive der geodätischen Höhensituation der Kläranlage kann in prozesstypisch ausreichend genauer Weise mittels der Auffangvorrichtung 9, die vorzugsweise als Abluft-Sammelhauben mit konstruktiv bekanntem Oberflächenanteil der Abluft-Sammelhaube bezogen auf die betreffende gesamte Beckenzone des Belebungsbeckens 6 inklusive Abluftmengen-Bestimmung, frei schwimmend positioniert an einer erfassungstypischen Stelle auf dieser Beckenzone, sehr wohl relativ genau, zumindest aber prozesstypisch präzise proportional, der Wert der austretenden Abluft in Menge und die Zusammensetzung der aufgefangenen Abluft prozesstypisch erfasst werden.


**Patentansprüche**

1. Verfahren zur Regelung der Zuführung von Umgebungsluft in ein Belebungsbecken (6) einer Abwasserkläranlage, mit den **dadurch gekennzeichnete**n Verfahrensschritten, dass

   - lit a) mittels einer am Belebungsbecken (6) angeordneten Auffangvorrichtung (9) das an einer vordefinierbaren Stelle der Oberfläche des Belebungsbeckens (6) aus dem im Belebungsbecken (6) austretende Gas, abgeschlossen von der Umgebungsluft, aufgefangen wird, und diese austretende Gasmenge einer Analyse unterzogen wird,
   - lit b) im Rahmen der Analyse der Sauerstoffgehalt und der Kohlendioxidgehalt im an der Oberfläche des Belebungsbeckens (6) aufgefangenen ausgetretenen Gas ermittelt wird,
   - lit c) die Differenz aus der Summe des Sauerstoffgehalts und des Kohlendioxidgehalts zwischen der zugeführten Umgebungsluft und der Summe des Sauerstoffgehalts und des Kohlendioxidgehalts des an der Oberfläche des Belebungsbecken (6) aufgefangenen Gases ermittelt wird,
   - lit d) aus der Differenz der Summe des Sauerstoffgehalts und des Kohlendioxidgehalts nach lit c), erzeugt durch den biologischen Schmutzfracht-Abbau und der nicht am biologischen Schmutzfracht-Abbau aktiv konzentrationsändernd beteiligten Gaskomponenten, die Menge des gesamten Sauerstoffverbrauchs und des anteilig erzeugten Kohlendioxids im Belebungsbecken (6) aus der zugeführten Umgebungsluft bestimmt wird,
   - lit e) die Menge der zugeführten Umgebungsluft in voreinstellbaren Schritten reduziert wird, solange die Proportion zwischen der in lit c) genannten Differenz und dem anteiligen Kohlendioxidgehalt unverändert bleibt und
   - lit f) falls sich die Proportion zwischen der in lit c) genannten Differenz und dem anteiligen Kohlendioxidgehalt verändert, die Menge der zugeführten Umgebungsluft um mindestens die im vorherigen Schritt reduzierte Luftmenge wiederum erhöht wird.

2. Verfahren nach Patentanspruch 1, **dadurch gekennzeichnet, dass** im Verfahrensschritt lit a) dass die austretende Gasmenge erfasst und ein typischer Teilstrom dessen einer Analyse unterzogen wird.

3. Verfahren nach Patentanspruch 1, **dadurch gekennzeichnet, dass** im Verfahrensschritt lit d) die Proportion der unterschiedlichen, an der Sauerstoff-Zehrung beteiligten biologischen Abbauprozesse bestimmt wird, so dass entsprechend der aktuellen Proportion im Vergleich zur erfahrungsgemäß zu erwartenden Proportion die Verfahrensschritte lit e) und lit f) durch definierte Substrat-Zufuhr und/oder Sauerstoff-Sollwert-Variation im erfassten gelösten Sauerstoff und/oder durch geeignete Variation der Umluftzufuhr der Schmutzfrachtabbau geregelt wird.

4. Verfahren nach Patentanspruch 3, **dadurch gekennzeichnet, dass** als eine Variation der Umgebungsluftzufuhr die Menge und/oder die Blasengröße der zugeführten Umgebungsluft verwendet wird.

5. Verfahren nach Patentanspruch 3 oder 4, **dadurch gekennzeichnet, dass** der Schmutzfrachtabbau zielgerecht und nach den gewünschten Prozess-Anteilsproportionen geregelt wird.

6. Verfahren nach einem der vorangehenden Patentansprüche, **dadurch gekennzeichnet, dass** bei Verfahrensschritt lit b) weitere Gaskomponenten analysiert werden, welche als Störkomponenten im gewünschten Schmutzfracht-Abbau durch untypische Schmutzfrachteinleitung den Abbau-Prozess stören und mittels Einleitung chemischer oder weiterer bakterieller Komponenten oder einem deutlichen Übermaß an Umgebungsluft durch den damit verbundenen Stripp-Effekt diese Störkomponenten kompensiert oder chemisch deaktiviert oder ausgestrippt werden.

7. Verfahren nach Patentanspruch 6, **dadurch gekennzeichnet, dass** als weitere Gaskomponenten leichtflüchtige Kohlenwasserstoffe, welche als sogenannte Aromate typisch in Lösungsmitteln enthalten sind, erkannt werden.

8. Verfahren nach einem der vorangehenden Patentansprüche, **dadurch gekennzeichnet, dass** die Umgebungsluft mittels eines auf dem Gelände der Abwasserkläranlage angeordneten Verdichters (10) aus der Umgebungsluft angesaugt und mittels des Verdichters (10) komprimiert und über einen Regelschieber oder ein Ventil (11) dem Belebungsbecken (6) zugeführt wird.

9. Verfahren nach Patentanspruch 8, **dadurch gekennzeichnet, dass** die in der Nähe des Belebungsbeckens (6) angesaugte Umgebungsluft anhand der messtechnisch erfassten, austretenden und analysierten Gasmenge über den Regelschieber oder das Ventil (11) dem Belebungsbecken (6) bedarfsgemäß zugeführt wird.

10. Verfahren nach einem der vorangehenden Patentansprüche, **dadurch gekennzeichnet, dass** sowohl die zugeführte Gesamtmenge der in das Belebungsbecken (6) eingetragenen Umgebungsluft und die Menge der Sauerstoffzehrung im Belegungsbecken (6) approximiert erfasst werden.

11. Verfahren nach einem der vorangehenden Patentansprüche, **dadurch gekennzeichnet, dass** die Differenzierung der Prozessanteile von Kohlenstoffabbau und weiterer sauerstoffzehrender biologischen Schmutzfrachtabbau-Anteile ohne gasförmig an der Oberfläche des Belebungsbeckens (6) aus dem im Belebungsbecken austretende Oxidkomponenten, abgeschlossen von der Umgebungsluft, wie zum Beispiel die Nitrifikation, im Belebungsbecken (6) anhand der Formel

$$\Delta = A - (a + b)$$

vorgenommen wird, wobei A für den $O_2$-Gehalt der zugeführten Umgebungsluft in Vol.-%, a für dem $O_2$-Gehalt der Abluft in Vol.-% und b für den $CO_2$-Gehalt der Abluft in Vol.-% steht und der Kohlenstoff-Abbau im Belebungsbecken (6) bekanntlich mindestens etwa Vierfünftel der Menge an für ihn zugeführten Sauerstoff für die $CO_2$-Produktion zehrt, und zusätzlich für die eigene Reproduktion, den Biomasse-Aufbau bzw. deren Vermehrung) benötigt, sodass sich der der $\Delta$-Bezug anhand der Formel

$$\Delta = [(0{,}25 * b) + (\Delta_{NH4\text{-}Abbau})],$$

wobei: $\Delta_{C\text{-}Abbau}$ = 0,25*b und folglich: $\Delta_{NH4\text{-}Abbau}$ = $\Delta$ - 0,25*b,
ergibt, sofern nicht weitere biologische Komponenten mit Sauerstoffzehrung und ohne gasförmige Oxidaustritte beteiligt sind, wie etwa für die $PO_4{}^{3-}$-Bildung, und
die Proportionen zwischen diesen beiden vorgenannten wesentlichen Prozessanteilen in der (in diesem Fall sogenannten) aeroben Nitrifikationsstufe sich vereinfacht nach der Formel

$$CF = C\text{-}Abbau \:/\: NH_4\text{-}Abbau = 1{,}25*b \:/\: (\Delta - 0{,}25*b)$$

darstellen lässt unter der Annahme, dass die Kohlenstoffabbau-Biologie hier anteilig 25% des gezehrten Sauerstoffs, den sie zur Kohlendioxidbildung zehrt, zusätzlich für ihren eigenen Biologieaufbau ohne Kohlendioxidbildung gezehrt wird.

12. Verfahren nach Patentanspruch 11, **dadurch gekennzeichnet, dass** für A als der Zahlenwert einundzwanzig angenommen wird.

13. Verfahren nach einem der vorangehenden Patentansprüche, **dadurch gekennzeichnet, dass** die Abwasserkläranlage in der Regel aufweist

   - einen Schmutzwasserzulauf (1, 2), dessen Zulaufmenge variiert,
   - eine dem Schmutzwasserzulauf (1, 2) nachgeordnete Absonderungsvorrichtung (3) für die im Schmutzwasser enthaltenen mechanisch zurückhaltbaren groben Verschmutzungen,

- ein der Absonderungsvorrichtung (3) nachgeschaltetes Absetzbecken (4), in dem sich Stoffe, die im Schmutzwasser ungelöst enthalten sind und eine deutlich höhere Dichte als Wasser aufweisen, auf dessen Boden absetzen und sich Stoffe, die im Schmutzwasser ungelöst enthalten sind und eine deutlich geringere Dichte als Wasser aufweisen, an der Oberfläche des Schmutzwassers im Absetzbecken (4) anlagern,

- das Belebungsbecken (6), dem Schmutzwasser aus dem Absetzbecken (4) zugeführt wird und in welchem Belebtschlamm mit aggregierten Bakterien und anderen Mikroorganismen enthalten ist, welche Abwasserinhaltsstoffe biotisch oxidativ abbauen, wobei aus dem Belebungsbecken (6) mit Belebtschlamm versetztes Wasser abläuft im selben Maß, wie Schmutzwasser aus dem Absetzbecken (4) zugeführt wird, wobei im Bereich des Bodens zumindest eines Teils des Belebungsbeckens (6) Umgebungsluft, die aus der Umgebung des Belebungsbeckens entnommen wird, in selbiges unter Druck zumindest zeitanteilig oder kontinuierlich feinblasig eingeblasen wird,

- ein Nachklärbecken (7), in das das mit Belebtschlamm versetzte Wasser abläuft und in dem der Belebtschlamm durch Absetzen aus dem gereinigten Abwasser abgetrennt wird, und

- einem Ablauf (8), über den das gereinigte Abwasser aus dem Nachklärbecken (7) die Kläranlage verlässt.

14. Vorrichtung zur Verwendung in dem Verfahren nach einem oder mehrerer der vorangehenden Patentansprüche 1 bis 13, bestehend zumindest aus einer Steuereinheit (12), einer Auffangvorrichtung (9), die an einer vordefinierbaren Stelle der Oberfläche des Belebungsbeckens (6) angeordnet ist und Teile aus dem im Belebungsbecken (9) austretendem Gas, abgeschlossen von der Umgebungsluft, auffängt, und die aufgefangene Gasmenge einer Gasanalyseeinheit (13) zuführt, wobei der Gasanalyseeinheit (13) außerdem Umgebungsluft von an einer Aufnahmeposition (14) zugeführt wird und die Gasanalyseeinheit (13) die Differenz aus der Summe des Sauerstoffgehalts und des Kohlendioxidgehalts zwischen der zugeführten Umgebungsluft an der Aufnahmeposition (14) und der von der Auffangvorrichtung (9) an der Oberfläche des Belebungsbecken (6) aufgefangenen Gases ermittelt und der Steuereinheit (12) zuleitet, wobei die Steuereinheit (12) den Verdichter (10) ansteuert, der Umgebungsluft im Umfeld der Aufnahmeposition (14) ansaugt, diese komprimiert und über den Regelschieber oder das Ventil (11) dem Belebungsbecken (6) zuführt, wobei die Steuereinheit (12) mittels des Verdichters (10) die Menge der zugeführten Umgebungsluft in voreinstellbaren Schritten reduziert, solange die Proportion zwischen dem Kohlendioxidgehalt in der Abluft und der Differenz aus der Summe des Sauerstoffgehalts und des Kohlendioxidgehalts zwischen der zugeführten Umgebungsluft und der des an der Oberfläche des Belebungsbeckens (6) mittels der Auffangvorrichtung (9) aufgefangenen Gases unverändert bleibt, jedoch die Steuereinheit (12) mittels des Verdichters (10) die Menge der zugeführten Umgebungsluft, in voreinstellbaren Schritten erhöht, falls sich die Proportion zwischen dem Kohlendioxidgehalt in der Abluft und der Differenz aus der Summe des Sauerstoffgehalts und des Kohlendioxidgehalts zwischen der zugeführten Umgebungsluft und der an der Oberfläche des Belebungsbeckens (6) mittels der Auffangvorrichtung (9) aufgefangenen Gases verändert.

## Claims

1. Method for controlling the supply of ambient air to an activation tank (6) of a waste water purification plant, with the method steps **characterized in that**

   - lit a) by means of a collecting device (9) arranged on the activation tank (6), the gas emerging from the activation tank (6) is collected at a predefinable point on the surface of the activation tank (6), sealed off from the ambient air, and this emerging gas volume is subjected to an analysis,
   - lit b) as part of the analysis the oxygen and carbon dioxide content in the emerging gas collected on the surface of the activation tank (6) is determined,
   - lit c) the difference between the sum of the oxygen content and the carbon dioxide content of the supplied ambient air and the sum of the oxygen content and the carbon dioxide content of the emerging gas collected on the surface of the activation tank (6) is determined,
   - lit d) from the difference between the sums of the oxygen content and the carbon dioxide content according to lit c), produced by the biological pollutant load reduction and the gas components not actively involved in the biological pollutant load reduction in changing the concentration, the amount of the total oxygen consumption and the proportion of carbon dioxide produced in the activation tank (6) from the supplied ambient air is determined,
   - lit e) the amount of ambient air supplied is reduced in pre-settable steps as long as the proportion between the difference mentioned in lit c) and the proportional carbon dioxide content remains unchanged and
   - lit f) if the proportion between the difference mentioned in lit c) and the proportional carbon dioxide content changes, the amount of ambient air supplied is increased by at least the reduction of the amount of air in the previous step.

2. Method according to patent claim 1, **characterized in that** the amount of emerging gas in the method step lit a) is recorded and a typical partial stream thereof is subjected to an analysis.

3. Method according to patent claim 1, **characterized in that** in the method step lit d) the proportion of the various biological degradation processes involved in the oxygen consumption is determined, so that in the process steps lit e) and lit f) according to the present proportion compared to the proportion reasonably expected, the pollutant load reduction is controlled by defined substrate supply and/or oxygen setpoint variation in the recorded dissolved oxygen and/or by suitable variation of the ambient air supply.

4. Method according to patent claim 3, **characterized in that** the amount and/or the bubble size of the supplied ambient air is used as a variation of the ambient air supply.

5. Method according to patent claim 3 or 4, **characterized in that** the pollutant load reduction is controlled in a targeted manner and according to the desired proportions of the process components.

6. Method according to one of the preceding patent claims, **characterized in that** in the method step lit b) further gas components are analyzed which disturb the reaction process as interfering components in the desired pollutant load reduction due to atypical pollutant load and, by introduction of chemical or further bacterial components or the stripping effect caused by a significant excess of ambient air supply, these interfering components are compensated or chemically deactivated or removed by stripping.

7. Method according to patent claim 6, **characterized in that** as further gas components volatile hydrocarbons, which are typically contained in solvents as so-called aromatics, are detected.

8. Method according to one of the preceding patent claims, **characterized in that** the ambient air is sucked in out of the ambient air by means of a compressor (10) arranged on the site of the waste water purification plant and compressed by means of the compressor (10) and supplied to the activation tank (6) via a control slide or a valve (11).

9. Method according to patent claim 8, **characterized in that** the ambient air sucked in near the activation tank (6) is supplied to the activation tank (6) as required via the control slide or the valve (11) on the basis of the via measurement detected, emerging and analyzed amount of gas.

10. Method according to one of the preceding patent claims, **characterized in that** both the supplied total amount of ambient air introduced into the activation tank (6) and the amount of oxygen consumption in the activation tank (6) in approximation are determined.

11. Method according to one of the preceding patent claims, **characterized in that** the differentiation of the process components of carbon degradation and further oxygen-consuming biological contaminant degradation components without gaseous release at the surface of the activation tank (6) from the oxide components emerging in the activation tank, closed from the ambient air, such as, for example, nitrification, in the activation tank (6) is carried out on the basis of the formula

$$\Delta = A - (a + b)$$

at which A represents the $O_2$ content of the supplied ambient air in vol.%, a represents the $O_2$ content of the outgoing air in vol.% and b represents the $CO_2$ content of the outgoing air in vol.% and the carbon degradation in the activation tank (6) being known to consume at least about four-fifths of the amount of oxygen supplied to it for $CO_2$ production, and additionally requires for its own reproduction, the biomass build-up (or its multiplication), so that the $\Delta$ reference based on the formula

$$\Delta = [(0,25 * b) + (\Delta_{NH4-degradation})],$$

whereby: $\Delta_{C\text{-degradation}} = 0{,}25*b$ and therefore: $\Delta_{NH4\text{-degradation}} = \Delta - 0{,}25*b$,
is given, provided that no other biological components with oxygen consumption and without gaseous oxide emissions are involved, such as for $PO_4^{3-}$ formation, and

the proportions between these two aforementioned essential process parts in the (in this case so-called) aerobic nitrification stage being simplifiable according to the formula

$$CF = C\text{-}degradation \: / \: NH_4\text{-}degradation = 1,25*b \: / \: (\Delta - 0,25*b)$$

assuming that the carbon removal biology here consumes 25% of the oxygen consumed for carbon dioxide formation, additionally for its own biology build-up without carbon dioxide formation.

12. Method according to patent claim 11, **characterized in that** twenty-one is assumed as the numerical value for A.

13. Method according to one of the preceding patent claims, **characterized in that** the waste water purification plant generally comprises

- a waste water inlet (1, 2) with a variable inflow volume,
- a separation unit (3) for the mechanically retainable coarse contaminants contained in the waste water, which is arranged downstream of the waste water inlet (1, 2),
- a sedimentation tank (4) connected downstream of the separation unit (3), in which substances that are contained undissolved in the waste water and have a significantly higher density than water settle to the bottom of the sedimentation tank and substances that are contained undissolved in the waste water and have a significantly lower density than water accumulate at the surface of the waste water in the sedimentation tank (4),
- the activation tank (6), to which waste water from the sedimentation tank (4) is supplied and which contains activated sludge with aggregated bacteria and other microorganisms, which biotically oxidatively degrade waste water constituents, and water mixed with activated sludge runs out of the activation tank (6) at the same rate as dirty water is supplied from the sedimentation tank (4), whereby ambient air, which is taken from the vicinity of the activation tank, is blown into the area at the floor of at least part of the activation tank (6) in the form of fine bubbles under pressure, at least intermittently or continuously,
- a clarification tank (7) into which the water mixed with activated sludge flows and in which the activated sludge is separated from the treated waste water by settling, and
- an outlet (8) by which the treated waste water leaves the treatment plant from the clarification tank (7).

14. Device for the use in a method according to one or more of the preceding patent claims 1 to 13, consisting at least of a control unit (12), a collecting device (9) that is arranged at a predefinable location on the surface of the activation tank (6) and collects parts of the gas emerging from the activation tank (6), sealed off from the ambient air, and supplies the collected amount of gas to a gas analysis unit (13), wherein ambient air is also supplied from a receiving position (14) to the gas analysis unit (13) and the gas analysis unit (13) determines the difference between the sum of the oxygen content and the carbon dioxide content of the supplied ambient air at the receiving position (14) and the gas collected by the collecting device (9) at the surface of the activation tank (6) and supplies it to the control unit (12), whereby the control unit (12) controls the compressor (10), which draws in ambient air in the vicinity of the receiving position (14), compresses it and feeds it to the activation tank (6) via the control slide or the valve (11), whereby the control unit (12) reduces the amount of supplied ambient air in pre-settable steps by means of the compressor (10) as long as the proportion between the carbon dioxide content in the exhaust gas and the difference between the sum of the oxygen content and the carbon dioxide content between the supplied ambient air and that of the gas collected on the surface of the activation tank (6) by means of the collecting device (9) remains unchanged, however, the control unit (12) increases the amount of supplied ambient air by means of the compressor (10) in pre-settable steps, if the proportion between the carbon dioxide content in the exhaust gas and the difference between the sum of the oxygen content and the carbon dioxide content between the supplied ambient air and the gas collected on the surface of the activation tank (6) by means of the collecting device (9) changes.

**Revendications**

1. Procédé pour la régulation de l'introduction d'air ambiant dans un bassin d'activation (6) d'une station d'épuration d'eaux usées, comportant les étapes de procédé **caractérisées en ce que**

- lit a) au moyen d'un dispositif de collecte (9) disposé sur le bassin d'activation (6), le gaz se dégageant du bassin d'activation (6) à un emplacement prédéfinissable de la surface du bassin d'activation (6), isolé de l'air ambiant, est capté, et cette quantité de gaz se dégageant est soumise à une analyse,
- lit b) dans le cadre de l'analyse, la teneur en oxygène et la teneur en dioxyde de carbone du gaz se dégageant, capté à la surface du bassin d'activation (6), sont déterminées,

- lit c) la différence entre la somme de la teneur en oxygène et de la teneur en dioxyde de carbone de l'air ambiant introduit et la somme de la teneur en oxygène et de la teneur en dioxyde de carbone du gaz capté à la surface du bassin d'activation (6) est déterminée,

- lit d) à partir de la différence de la somme de la teneur en oxygène et de la teneur en dioxyde de carbone selon lit c), engendrée par la dégradation biologique de la charge polluante, et des composants gazeux ne participant pas activement à la dégradation biologique de la charge polluante en modifiant la concentration, la quantité de la consommation totale d'oxygène et la quantité du dioxyde de carbone produit proportionnellement dans le bassin d'activation (6) à partir de l'air ambiant introduit sont déterminées,

- lit e) la quantité de l'air ambiant introduit est réduite par étapes préréglables, tant que la proportion entre la différence mentionnée en lit c) et la teneur proportionnelle en dioxyde de carbone reste inchangée et

- lit f) si la proportion entre la différence mentionnée en lit c) et la teneur proportionnelle en dioxyde de carbone est modifiée, la quantité de l'air ambiant introduit est de nouveau augmentée d'au moins la quantité d'air réduite dans l'étape précédente.

2. Procédé selon la revendication 1, **caractérisé en ce que**, dans l'étape lit a) du procédé, la quantité de gaz se dégageant est captée et un courant partiel caractéristique de celle-ci est soumis à une analyse.

3. Procédé selon la revendication 1, **caractérisé en ce que**, dans l'étape lit d) du procédé, la proportion des différents processus de dégradation biologique participant à la consommation d'oxygène est déterminée, de sorte que, conformément à la proportion actuelle en comparaison de la proportion à attendre selon l'expérience, les étapes lit e) et lit f) du procédé sont réglées par apport défini de substrat et/ou variation de la valeur de consigne de l'oxygène dans l'oxygène dissous détecté et/ou par variation appropriée de l'alimentation en air circulant de la dégradation de la charge polluante.

4. Procédé selon la revendication 3, **caractérisé en ce qu'**en tant qu'une variation de l'introduction d'air ambiant est/sont utilisée(s) la quantité et/ou la taille de bulle de l'air ambiant introduit.

5. Procédé selon la revendication 3 ou 4, **caractérisé en ce que** la dégradation de charge polluante est réglée de manière ciblée et selon les proportions souhaitées de parties du processus.

6. Procédé selon l'une quelconque des revendications précédentes, **caractérisé en ce que**, dans l'étape lit b) du procédé, sont analysés d'autres composants gazeux qui, en tant que composants perturbateurs dans la dégradation souhaitée de charge polluante, perturbent le processus de dégradation par introduction de charge polluante atypique et, au moyen d'introduction de composants chimiques ou de composants bactériens supplémentaires ou d'un net excès d'air ambiant, ces composants perturbateurs sont compensés ou désactivés chimiquement ou extraits par l'effet de désorptions qui y est lié.

7. Procédé selon la revendication 6, **caractérisé en ce que** comme autres composants gazeux sont identifiés des hydrocarbures très volatils qui sont caractéristiquement contenus en tant que composés dits aromatiques dans des solvants.

8. Procédé selon l'une quelconque des revendications précédentes, **caractérisé en ce que** l'air ambiant est aspiré à partir de l'air ambiant au moyen d'un compresseur (10) disposé sur le terrain de la station d'épuration d'eaux usées et est comprimé au moyen du compresseur (10) et envoyé au bassin d'activation (6) via une vanne de régulation ou une soupape (11) .

9. Procédé selon la revendication 8, **caractérisé en ce que** l'air ambiant aspiré à proximité du bassin d'activation (6) est envoyé selon les besoins au bassin d'activation (6) via la vanne de régulation ou la soupape (11), à l'aide de la quantité de gaz détectée, se dégageant et analysée par des techniques de mesure.

10. Procédé selon l'une quelconque des revendications précédentes, **caractérisé en ce qu'**aussi bien la quantité totale envoyée de l'air ambiant introduit dans le bassin d'activation (6) que la quantité de la consommation d'oxygène dans le bassin d'activation (6) sont déterminées de manière approximative.

11. Procédé selon l'une quelconque des revendications précédentes, **caractérisé en ce que** la différenciation des parties de processus de dégradation du carbone et d'autres parties de dégradation biologique de charge polluante consommant de l'oxygène sans composants de type oxyde se dégageant sous forme gazeuse à la surface du bassin d'activation (6), isolés de l'air ambiant, comme par exemple la nitrification, est effectuée dans le bassin d'activation (6) à l'aide de la formule

$$\Delta = A - (a + b)$$

où A représente la teneur en $O_2$ de l'air ambiant introduit en % en volume, a représente la teneur en $O_2$ de l'air évacué en % en volume et b représente la teneur en $CO_2$ de l'air évacué en % en volume, et la dégradation du carbone dans le bassin d'activation (6) consomme pour la production de $CO_2$, comme on le sait, au moins environ quatre cinquièmes de la quantité d'oxygène qui y est envoyée, et requiert en outre pour sa propre reproduction, la constitution de biomasse (ou sa multiplication), de sorte que la relation $\Delta$ peut être représentée à l'aide de la formule

$$\Delta = [(0,25 * b) + (\Delta_{\text{dégradation de NH4}})],$$

où : $\Delta_{\text{dégradation de C}} = 0,25*b$ et il en résulte : $\Delta_{\text{dégradation de NH4}} = \Delta - 0,25*b$,
dans la mesure où d'autres composants biologiques à consommation d'oxygène et sans dégagements d'oxydes gazeux ne participent pas, comme par exemple pour la formation de $PO_4^{3-}$, et
les proportions entre ces deux parties essentielles du processus précitées dans l'étape de nitrification (dite en cas) aérobie peuvent être représentées de manière simplifiée selon la formule

$CF = dégradation\ de\ C\ /\ dégradation\ de\ NH_4 = 1,25*b\ /\ (\Delta - 0,25*b)$

en admettant que la biologie de dégradation du carbone utilise ici en plus pour son propre développement biologique, sans formation de dioxyde de carbone, en proportion 25 % de l'oxygène consommé qu'elle utilise pour la formation de dioxyde de carbone.

**12.** Procédé selon la revendication 11, **caractérisé en ce que** pour A vingt-et-un est pris en tant que la valeur numérique.

**13.** Procédé selon l'une quelconque des revendications précédentes, **caractérisé en ce que** la station d'épuration d'eaux usées comporte en règle générale

- une arrivée d'eaux usées (1, 2) dont le débit d'arrivée varie,
- un dispositif de séparation (3) disposé en aval de l'arrivée d'eaux usées (1, 2) pour les impuretés grossières contenues dans les eaux usées, pouvant être retenues mécaniquement,
- un bassin de décantation (4) raccordé en aval du dispositif de séparation (3), dans lequel des substances qui sont contenues non dissoutes dans les eaux usées et présentent une densité nettement plus élevée que l'eau se déposent sur son fond et des substances qui sont contenues non dissoutes dans les eaux usées et présentent une densité nettement plus faible que l'eau s'accumulent à la surface des eaux usées dans le bassin de décantation (4),
- le bassin d'activation (6), auquel sont envoyées des eaux usées provenant du bassin de décantation (4) et dans lequel sont contenues des boues activées avec des bactéries agrégées et d'autres micro-organismes, qui dégradent par oxydation biologique des substances contenues dans les eaux usées, de l'eau mélangée avec des boues activées s'écoulant hors du bassin d'activation (6) dans les mêmes proportions que les eaux usées qui sont envoyées hors du bassin de décantation (4), de l'air ambiant, qui est prélevé de l'environnement du bassin d'activation, étant injecté dans celui-ci sous pression, par fines bulles, au moins partiellement dans le temps ou en continu, dans la zone du fond d'au moins une partie du bassin d'activation (6).
- un bassin de décantation secondaire (7), dans lequel s'écoule l'eau mélangée à des boues activées et dans lequel les boues activées sont séparées des eaux usées épurées par décantation, et
- une sortie (8) par laquelle les eaux usées épurées provenant du bassin de décantation secondaire (7) quittent la station d'épuration.

**14.** Dispositif destiné à l'utilisation dans le procédé selon l'une quelconque des revendications précédentes là 13, consistant au moins en une unité de commande (12), un dispositif de collecte (9) qui est disposé en un emplacement prédéfinissable de la surface du bassin d'activation (6) et capte, isolé de l'air ambiant, des parties du gaz se dégageant du bassin d'activation (9), et envoie à une unité d'analyse de gaz (13) la quantité de gaz captée, à l'unité d'analyse de gaz (13) étant en outre envoyé de l'air ambiant depuis une position de collecte (14) et l'unité d'analyse de gaz (13) détermine la différence entre la somme de la teneur en oxygène et de la teneur en dioxyde de carbone de l'air ambiant introduit à la position de collecte (14) et celle du gaz capté par le dispositif de collecte (9) à la surface du bassin d'activation (6) et l'envoie à l'unité de commande (12), l'unité de commande (12) commandant le compresseur (10) qui aspire l'air ambiant dans l'environnement de la position de collecte (14), le comprime et l'envoie via la vanne de régulation ou la vanne (11) au bassin d'activation (6), l'unité de commande (12) réduisant par étapes préréglables, au moyen du compresseur (10), la quantité de l'air ambiant introduit, tant que la proportion entre la teneur en dioxyde de carbone de l'air évacué et la différence de la somme de la teneur en oxygène et de la teneur en dioxyde de carbone entre l'air ambiant introduit et celle du gaz capté à la surface du bassin d'activation (6) au moyen du dispositif de captage (9) reste inchangée, mais l'unité de commande (12) augmente par étapes préréglables, au moyen du compresseur (10), la quantité d'air ambiant introduit si la proportion entre la teneur en dioxyde de carbone de l'air évacué et la différence de la somme de la teneur en oxygène et de la teneur en dioxyde de carbone entre l'air ambiant introduit et celle du gaz capté à la surface du bassin d'activation (6), au moyen du dispositif de captage (9), change.

FIG

**IN DER BESCHREIBUNG AUFGEFÜHRTE DOKUMENTE**

**In der Beschreibung aufgeführte Patentdokumente**

- DE 3019698 A1
- DE 3150902 A1
- DE 19944389 A1
- EP 0885639 A1
- WO 200119738 A1
- EP 0732588 A2
- EP 0585702 A1
- US 20040112829 A1
- KR 20160104249 A